(19) **Europäisches Patentamt / European Patent Office / Office européen des brevets**

(11) **EP 1 488 540 B1**

(12) **EUROPEAN PATENT SPECIFICATION**

(45) Date of publication and mention of the grant of the patent:
**06.06.2007 Bulletin 2007/23**

(21) Application number: **03708781.4**

(22) Date of filing: **10.03.2003**

(51) Int Cl.:
*H04B 7/005* (2006.01)     *H04Q 7/36* (2006.01)

(86) International application number:
**PCT/SE2003/000392**

(87) International publication number:
**WO 2003/079574 (25.09.2003 Gazette 2003/39)**

(54) **METHOD FOR CONFIGURING THE POWER OUTPUT OF THE PILOT CHANNELS IN A CELLULAR RADIO NETWORK**

VERFAHREN ZUM KONFIGURIEREN DER AUSGANGSLEISTUNG DER PILOTKANÄLE IN EINEM ZELLULARFUNKNETZWERK

PROCEDE DE CONFIGURATION DE LA PUISSANCE DE SORTIE DES VOIES PILOTES DANS UN RESEAU DE TELEPHONIE CELLULAIRE

(84) Designated Contracting States:
**AT BE BG CH CY CZ DE DK EE ES FI FR GB GR HU IE IT LI LU MC NL PT RO SE SI SK TR**

(30) Priority: **19.03.2002 SE 0200826**

(43) Date of publication of application:
**22.12.2004 Bulletin 2004/52**

(73) Proprietor: **Telia AB (publ)**
**123 86 Farsta (SE)**

(72) Inventors:
• **SOMMER, Magnus**
**S-136 70 Haninge (SE)**
• **NILSSON, Ulf**
**S-137 32 Västerhaninge (SE)**

(74) Representative: **Akerman, Marten Lennart et al**
**Albihns Malmö AB**
**Box 4289**
**203 14 Malmö (SE)**

(56) References cited:
**US-B1- 6 314 294**

• **AKL R.G.: 'Multicell CDMA network design' IEEE TRANSACTIONS ON VEHICULAR TECHNOLOGY vol. 50, no. 3, pages 711 - 722, XP002966497**

**Description**

**Technical field**

The present invention relates to a method, a system and software to plan and configure mobile telephone systems. More exactly is related to a method, a system and software to efficiently determine the power output of the pilot channel in different cells in a cellular mobile telephone system.

**Prior art**

In all mobile radio communication systems the supply of frequencies is a limiting factor. Each operator has one or more parts of the radio spectra allocated to him/her and must optimize the use of frequencies in order to offer high capacity, high quality and, with the new mobile telephone systems which at present are implemented, also flexibility regarding transmission speed and type of transmission. In TDMA-based (Time Division Multiple Access) networks, as for instance the globally distributed GSM-system, and the in North and South America common TIA/EIA-136 (TDMA), it is primarily the frequency planning which is, and has been, the object of optimization.

Communication systems based on CDMA-technology (Code Division Multiple Access), for instance UMTS (Universal Mobile Telecommunication System) and IS-95, are inherently interference limited. In such systems is of greatest importance that the radio network is planned to provide an optimal, or almost optimal, utilization of the allocated frequency range. Centrally for the planning of the radio network in CDMA-based systems is the so called pilot channel (CPICH). The pilot channel is used by the mobile terminal to search for best cell when the mobile terminal is switched on, and to with continuous measurements determine which cell that for the time being offers the best communication possibility, which constitutes the base for decision of change of cell. During communication, measurements on the pilot channel are used as base for decision of change to another cell (handover). By the mobile terminal received signal strength at a given point within a cell is determined by the power output of the pilot channel in combination with the radio environment, that is, among other things fading, shadowing and interference. The power output of the pilot channel by that constitutes a way to define the traffic coverage area of the cell, or in other words the coverage of the cell. Also the capacity of the system is influenced by the power output of the pilot channels, since the total emitted power output within an area controls available capacity. The pilot channels are described more in detail in the UMTS-document TS25.211.

In most existing systems the pilot channel planning, as well as frequency planning for TDMA-based systems, so far preferably has been made manually. Frequently a "trial-error"-method is applied where the different power output of the pilot channels are determined manually either based on measurements or expected behavior of the radio network. After that, the pilot channel plan usually is tested with a simulation tool to check if wanted power is achieved. In most cases a great deal of re-location and a number of simulations are required to achieve a good result. The trial-error-methods are time-consuming and have to be executed by specialized and experienced staff to provide optimized systems. Due to this, many radio networks in operation are not optimized.

The need for optimizing radio networks with methods which are possible to automatize consequently is great. In US patent 5,859,839 by M.T. Ahlenius et al, a method is described to automatically select power for pilot channels.

For the radio network which shall be optimized, a number of different values in a number of points are determined which intends to describe the system. Values can, for instance, be interference, hand-off-value, power, traffic load and weighting with regard to, for instance, type of communication. The values are collected in different meshes to make it possible to evaluate them and provide a picture of the performance of the radio network. Optimization is performed according to the principles for simulated annealing, but other optimization algorithms are mentioned, for instance genetic. At the optimization, certain power output, of the pilot channels and the "meshes" are evaluated to find out if an improvement in performance has been achieved. The evaluation of the "meshes" and the weighing together of their importance for the performance of the radio network can be an extensive and time-consuming process. From the document is not evident how an unequivocal numerical value for the performance of the radio network shall be calculated, and for that reason it is desirable to find other methods to, from a time efficiency point of view, describe the performance of the radio network.

Patent application EP 1028543 by D. Di Huo describes a method for downlink power control which also can be used for pilot channel planning. Noise level and wave propagation are measured at a number of points in the radio network, and the power output in downlink is calibrated to satisfy a predefined objective value. The objective value here is a predefined value, a "recommended" value, and does not necessarily represent one for the system as a whole optimal condition.

The paper AKL R.G.: 'Multicell CDMA network design' IEEE TRANSACTIONS ON VEHICULAR TECHNOLOGY vol. 50, no. 3, pages 711 - 722, XP002966497 (D1) shows several examples of network capacity optimization.

## Summary of the invention

The aim of the present invention is to reduce above mentioned problems to achieve an efficient pilot channel planning in one for CDMA-based cellular mobile telephone system.

This is achieved by a method and a software product described in the characterizing parts of the independent patent claims.

Owing to that the method according to the invention utilizes an objective function which describes the performance of the cellular radio network and includes a coverage related term and a capacity related term, the power output of the pilot channels can be configured so that the capacity is optimized at the same time as demands on coverage are satisfied.

One advantage with the present invention is that the objective function need not be simulated but can be calculated, which considerably reduces the need of processor power and time.

Another advantage of the present invention is that no particular verification step including simulation need to be performed to get a measure of the performance of the system.

## Brief description of drawings

Figure la-b shows a cellular mobile telephone system in which the present invention can be utilized.

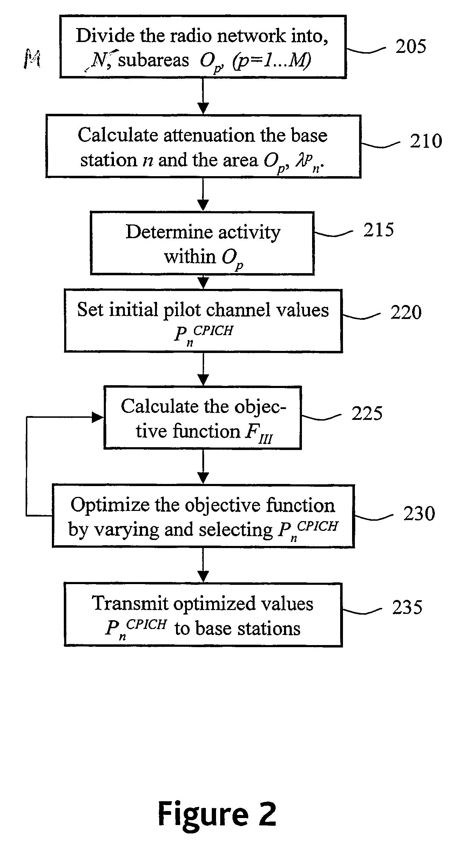

Figure 2 shows a flow chart for pilot channel planning according to the present invention.

## Description of embodiments

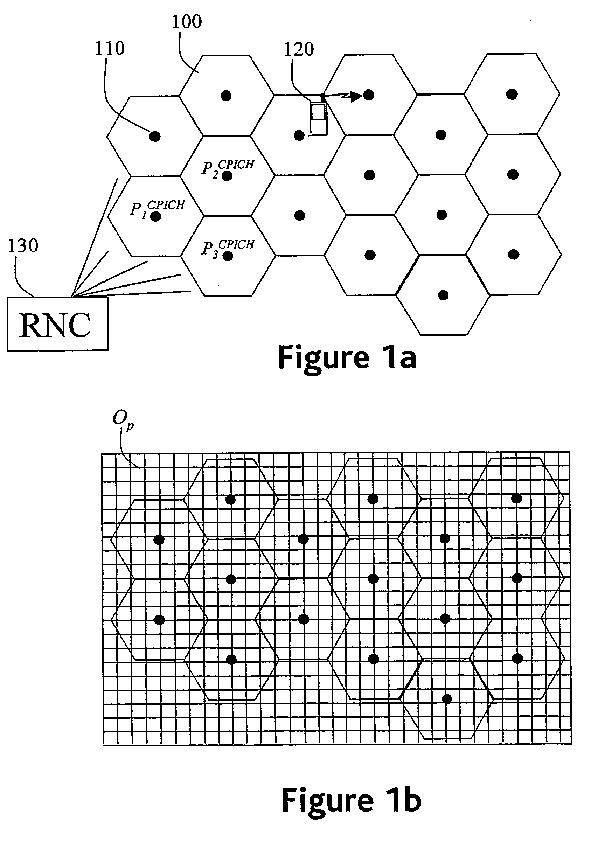

Figure la is a schematic drawing over a cellular mobile telephone network of the type in which the present invention can be utilized. In the Figure a number of hexagonal cells 100, with a base station 110 located centrally in each are shown. The drawing shall be regarded as an idealized picture of a cellular network. In a real network the size and form of the cells vary considerably, for one thing because of topographical reasons, but also for making it possible to offer higher capacity and different degrees of service in different areas. In networks based on CDMA (Code Division Multiple Access) and W-CDMA (Wideband-CDMA), such as networks according to the standard UMTS (Universal Mobile Telecommunication System) the size of a cell is defined by the so called pilot channel, in the standard called CPICH. This is done by a mobile terminal, exemplified by mobile terminal 120 in Figure 1, continuously measuring which cell that provides the best communication possibility. The estimation is based on RSCP (received signal code power). The received signal strength, RSCP, depends on the transmitted signal strength of the pilot channel, the position of the mobile terminal in relation to the base station, and the propagation (attenuation) of the radio waves. The signal strength of the transmitted pilot channel consequently can be used to determine the traffic coverage area of the cells, that is, the size of the cells. The power output of the pilot channels from base station No. $n$ is represented by $P_n^{CPICH}$ (in Figure 1 exemplified by $P_1^{CPICH}$, $P_2^{CPICH}$ och $P_3^{CPICH}$). Each base station further has a maximum available power output designated, $Pn,max$, ($P_{1,max}$ $P_{2,max}$, and $P_{3,max}$). Often there is also one by license providing authorities stipulated lower limit, which the RSCP of the pilot signal must not fall below. In for instance Sweden this limit has by the National Post and Telecom Agency, PTS, been set to 58 dBμV/m for at least 95% of the area. The designation $P_{1v1}$ is used for the wanted signal level of the pilot channel and $p_{target}$ for the wanted area probability. Limits as this in combination with the definition of the traffic coverage area in interaction with other cells and the satisfying of capacity and quality demands in different parts of the network are basic parameters for the pilot channel planning.

The power output $P_n^{CPICH}$ of the different pilot channels, as well as a number of other parameters and all call control, are set via one (or more) Radio Network Controllers, RNC) 130, with which all base stations 110 communicate.

Pilot channel configuration is normally performed at start-up of a new network, or when parts of the network have been changed, for instance when new base stations (new cells) have been installed. Further it can be advisable to perform a reconfiguration of the pilot channels if the network does not show the performance which has been expected or in order to take into consideration changed conditions in the radio environment. It is also possible to dynamically pilot channel configure in order to better follow changes in traffic load during for instance a day.

Figure 2 shows a flow chart for the main steps of the method for pilot channel planning according to the present invention. A mathematical description of certain for the performance essential parts will be given below. In this embodiment is assumed that the following is known about the radio network: a) The locations of the base stations are fix and known, b) The wave propagation is known, or can be calculated with good accuracy by means of for the expert well known methods, c) The distribution of the traffic over the area is known or can be calculated or approximated. Centrally for the method is the defining and calculation of an objective function $F_{III}$, which shall express the performance of the radio network by a numerical value. The objective function must in a correct way describe influence from the power of the pilot channels on the network from all relevant aspects. In addition, the objective function must be possible to calculate in a time efficient way. The pilot planning method includes the steps:

205. The radio network, or that part of the radio network which shall be power output configured, is divided into smaller areas. The areas should be small enough that neither received signal strength nor distribution of traffic varies considerably within the area. In the following calculations and the optimization, constant received signal strength and constant distribution of traffic within the areas is assumed. The number of areas are designated M, and each area $O_p$. (p=1...M) . In Figure 1b is schematically shown how a part of a radio network can be divided into smaller areas $O_p$. In Figure 1b a regular, uniform and with identically large sub areas, $O_p$, division of the radio network is shown. Such a type of division is easy to make, but in some applications it can be advantageous with an irregular and/or not uniform division. For instance can knowledge of the topology, the geography or expected traffic intensity indicate that it is better with a more detailed division in some part of the radio network than in others.

210. In a second step, the attenuation of the radio signal of the pilot channel between the base station $n$ and the area $O_p$ is calculated (where n can be any of the base stations within the area which shall be planned) according to for the expert known methods for wave propagation. The attenuation is represented by $\lambda_p^n$.

215. In a third step is assumed that the average number of active users within $O_p$ of service number s (where s = 1 can stand for the speech service, s = 2 streaming etc) is known and equal to $pp^s$.

220. In a following step, initial values are given to the pilot channel power, $P_n^{CPICH}$. These can, for instance, however not necessarily, be selected equal for all base stations and with sufficiently high level to meet the coverage demand.

225. In this step the objective function is calculated according to:

$$F_{III} = \frac{100}{\sum_n P_{max,n}}\left(F_{cov} + \sum_n W_n^{III}\left(P_{max,n} - P_n^{TOT}\right)\right) \tag{1}$$

where

$$W_n^{III} = \begin{cases} 1, & if\ P_n^{TOT} \le P_{max,n} \\ k_w & otherwise \end{cases}$$

and

$$F_{cov} = \begin{cases} 0, & if\ p_{cov} \ge p_{t\arg et} \\ 100\left(p_{cov} - p_{t\arg et}\right)k_{cov} \end{cases}$$

The objective function according to this embodiment has two principal terms which attend to that the objective function meets the demands which have previously been described. These terms are a coverage related term, $F_{cov}$, which attends to that the coverage demand is met with, and the remaining term, which is related to capacity and quality. The coverage term punishes networks which have too low coverage area by/ with the weight $k_{cov}$ for each per cent the coverage is below the objective. The capacity term consists in principle of the average value of the remaining power margin (in W) which are in the cells. This, however, only applies when no cell exceeds its maximum power output. If this occurs, this is punished by/with the weight $k_w$ for each exceeding W. The weights are free parameters which normally are indicated at the utilization of the method. The including terms will be defined, and the necessary mathematical operations will be described below.

230. In an optimization step the objective function is optimized with regard to the power output of the pilot channels,

$P_n{}^{CPIH}$. The optimization can for instance be based on that the power output of the pilot channels are modified and the objective function is calculated according to step 225. Preferably a genetical algorithm is used (described below) for the optimization, but also other methods, as for instance simulated annealing or evolution methods, can be used.

235. In a finishing step the new values, $P_n{}^{CPIH}$, for the pilot channel power output is transmitted/transferred to respective base station via RCN:130.

Mathematical description of the objective function

The objective function according to the present invention and which is calculated in step 225 is given by:

$$F_{III} = \frac{100}{\sum_n P_{\max,n}} \left( F_{cov} + \sum_n W_n^{III} \left( P_{\max,n} - P_n^{TOT} \right) \right)$$

$$W_n^{III} = \begin{cases} 1, & if\ P_n^{TOT} \le P_{\max,n} \\ k_w & otherwise \end{cases}$$

$$(1)$$

where

$$F_{cov} = \begin{cases} 0, & if\ p_{cov} \ge p_{t\arg et} \\ 100 \left( p_{cov} - p_{t\arg et} \right) k_{cov} \end{cases}$$

$p_{cov}$ is the obtained area probability and the total power output $P_n{}^{TOT}$ are given by the matrix equation

$$\bar{P}^{TOT} = \left( 1 - \bar{\bar{\Omega}} \right)^{-1} \bar{\Lambda} \qquad (2)$$

where

$$\bar{P}^{TOT} = \begin{pmatrix} P_1^{TOT} \\ P_2^{TOT} \\ \vdots \\ P_N^{TOT} \end{pmatrix} \quad , \quad \bar{\Lambda} = \begin{pmatrix} \Lambda_1 \\ \Lambda_2 \\ \vdots \\ \Lambda_N \end{pmatrix} \quad \text{and} \quad \Omega_{nm} = \sum_{p \in Q_n} x_p \omega_{pm}$$

$Q_n$ represents the coverage area for cell number i, consequently the amount

$$Q_n = \left\{ p; \frac{P_n^{CPICH}}{\lambda_p^n} > \frac{P_m^{CPICH}}{\lambda_p^m} \quad \forall m \ne n \right\} \qquad (4)$$

and $b(p)$ represents the serving cell for the area $p$. If $p \in Q_n$ then $n=b(p)$ applies.

$A_n$ represents the load weighted average value of the wave propagation attenuations for cell number n,

$$\Lambda_n = \sum_{p \in Q_n} x_p N_p$$

$$N_p = N_0 \lambda_{b(p)}^p + \sum_{n=1}^{N} \left( P_n^{CPICH} + P_n^{common} \right) \omega_{pn} \qquad (5)$$

$$\omega_{pn} = \frac{\lambda_{b(p)}^p}{\lambda_n^p} \quad (n \neq b(p)); \quad \omega_{pb(p)} \equiv (1-\alpha).$$

where $P_n^{common}$ is the power output for the "common control"-channels in cell number n. These are set with/by a constant offset, D (in dB), in relation to the power output of the pilot channel.

$$P_n^{common} = 10^{D/10} P_n^{CPICH}$$

Further, $N_0$ represents the noise power within the bandwidth, $N$ the number of cells, and finally the load contribution from area p is represented by $x_p$:

$$x_p = \sum_s \rho_p^s \frac{(1-\alpha)R_s\gamma_s}{W + (1-\alpha)R_s\gamma_s} \qquad (6)$$

In this expression, $R_s$ stands for the data rate for service number $s$, and $\gamma_s$ for the Signal/Noise-requirement $(E_b/N_o)$ (actually bit energy over noise power density) for service number s.

Free parameters which are set during the utilization of the method for pilot channel planning are $k_{cov}$, $k_w$ and D. Suitable values of these parameters are given in the examples below. $k_{cov}$ is selected preferably so that $F_{cov}$ always is higher than the capacity term. $k_w$ preferably should not be selected so small that the system selects to give an individual cell too high power output ("blocking") in order to in this way make it possible to provide higher capacity in other cells. At the same time $k_w$ should be selected so that the proportion between $F_{cov}$ and the capacity term is preserved.

It should be noted that the here suggested objective function can be calculated and need not be simulated, which is common in the known technology. That the objective function can be calculated results in great saving of time. Further saving of time is achieved by reformulation of the problem, as is given by equation (2). Equation (2) implies that there is needed a matrix inversion to determine the total power output. The matrix which shall be inverted, 1-$\Omega$, is an $N$ x $N$ matrix (where $N$ is the number of cells), which in all normal cases is a relatively rapidly executed operation. Without the reformulation, instead a matrix of the size $M$ x $M$ has to be inverted ($M$ is the number of small areas, $O_p$). The saving of time thanks to this reformulation is extensive, since the time that is required for a matrix inversion is proportional to the cube of the number of columns (or lines) of the matrix. Typically N is of the magnitude $10^2$, whereas M is about $10^4$. The saving of time consequently is about one million, $10^6$, times.

Alternative formulations of the objective function

The objective function can, which will be obvious to the expert, be formulated in many different ways and yet be within the frame of the present invention. A number of such alternatives are described below. In the below described embodiments it is primarily only the framing of the objective function that is varied, that is step 225. The preceding initiation steps, as well as the subsequent optimization steps, are essentially executed in the same way as previous.

In a first alternative embodiment, the objective function is intended to give full coverage and at the same time maximize the average value of the power margin (in dB) between the total available power output the CPICH power output for all cells. The distribution of the traffic load is not taken into consideration. The objective function, $F_l$, is given by:

$$F_I = \frac{1}{N_{cells}} \left( F_{cov} + \sum_n W_n^I \left( 10 \log P_{max,n}^{CPICH} - 10 \log P_n^{CPICH} \right) \right)$$

$$W_n^I = \begin{cases} 1, & if \ P_n^{CPICH} \leq P_{max,n}^{CPICH} \\ k_W & otherwise \end{cases} \tag{7}$$

Alternatively can instead the absolute power margin (in mW) be utilized, which gives the expression for the objective function $F_{II}$:

$$F_{II} = \frac{1}{N_{cells}} \left( F_{cov} + \sum_n W_n^I \left( P_{max,n}^{CPICH} - P_n^{CPICH} \right) \right) \tag{8}$$

In the following objective functions also the distribution of the traffic load is taken into consideration. $F_{III}$ was described in detail above. The objective function $F_{IV}$ offers an alternative way of regarding the traffic load. The total power output $P_n^{TOT}$, respective the maximum available power output $P_{n,max}$, can approximately be described according to:

$$10 \log P_{max,n} = const. - 10 \log(1 - X_{max,n})$$

$$10 \log P_n^{TOT} = const. - 10 \log(1 - X_n)$$

where the constant includes all load independent terms. Maximum load respective current load per cell is given by $X_{max,n}$ respective $X_n$. If the equations above are used to give a measure of the load margin, $X_M = X_{max,n} - X_n$ per cell, the following expression is obtained:

$$X_{M,n} = X_{max,n} - X_n \Rightarrow X_{M,n} = (1 - X_n) \left( 1 - \frac{P_n^{TOT}}{P_{max,n}} \right)$$

and the objective function can be formulated as the average load margin for all cells:

$$F_{IV} = \frac{100}{N_{cells}} \left( F_{cov} + \sum_n (1 - X_n) \left( 1 - \frac{P_n^{TOT}}{P_{max,n}} \right) \right) \tag{9}$$

The objective function $F_{II}$ can be extended to also take into consideration the traffic load by each term in the sum being weighted by/with the load describing factor $1/(1 - X_n)$. Cells with a traffic load exceeding 100% are discriminated by/with a weight factor $k_X$. The objective function then will have the form:

$$F_V = \frac{1}{N_{cells}}\left( F_{cov} + \sum_n W_n^I W_n^V \frac{P_{max,n}^{CPICH} - P_n^{CPICH}}{1 - X_n} \right)$$

$$W_n^V = \begin{cases} 1, & if\ X_n < 1 \\ k_X & otherwise \end{cases}$$

$$(10)$$

### Description of the optimization step

The optimization step, 230, consists of a number of stages. The here suggested method for optimization, genetic algorithm is known but has been modified for the current problem, and the modifications are described below. For a complete description is referred to "A Genetic Algorithm for Function Optimization: A Matlab Implementation", by C. Houck, J. Joines and M. Kay, ACM Transactions on Mathematical Software, 1996.

The adaptation of the genetical algorithm to be used for the pilot planning problem is composed of the implementation of a mutation and a *crossover,* and the selection of *individual.* An individual is the amount of pilot power output for all cells, $\{P_n^{CPICH}, \forall\ n \leq N\}$. The mutation is a function which maps an individual on a new individual, that is, creates a new individual on basis of an old one. The following procedure is used:

1. Select randomly *K* different cells. (*K* is a free parameter).
2. For these K cells the pilot power output is randomly modified (each of them differently) according to

$$P_{n,new}^{CPICH} = P_{n,old}^{CPICH} + STEP \times (2 \times rand - 1)\ \left[dBm\right]$$

$$rand \in Uniform(0,1)$$

STEP is set by the user and rand is a uniformly distributed random number.

The crossover function maps two (parent-) individuals on two new (child-) individuals. It functions according to the following:

1. Select a number randomly between 1 and N. Call this number z.
2. Change the pilot power for cell number z between the two parent individuals. In this way two child individuals are created.

The genetic algorithm modifies in each step the set of individuals (called population) by means of the functions mutation and crossover. After that, a selection process is applied on the population, which on basis of the objective function value, calculated according to equation (1), step 225, selects which individuals that shall be allowed to proceed to next step. The selection process is a ranking function based on the normalized geometrical distribution, which is a standard selection process for the genetical algorithm (see).

The optimization step here has been exemplified by a genetic algorithm, which is a preferred embodiment of the invention. Experts, however, will realize that a number of other optimization algorithms, as for instance simulated annealing or evolution algorithms, as well as simulation methods of Monte Carlo-type, can utilize the advantages of the suggested objective function $F_{III}$.

### Test and verification of objective function and optimization algorithm

To verify the applicability of the here described embodiments of the present invention, here a test scenario consisting of 16 cells is described. The cells form a hexagonal square network with a distance between the base stations of about 346 m, which gives a longest distance from base station to cell border of 200 m. The network was divided into a rectangular square pattern, with 20x20 m large squares, which provided 5329 square points. The traffic was assumed to consist of only speech, with a bit rate R, of 12200 bits/s and a signal/noise-target (Eb/No) of 7,9 dB. The traffic load was assumed to be distributed to three hotspots with even load distribution between them. Two different traffic loads, one low and one high were tested. Further, values according to Table 1 were used to simulate an urban environment.

**Table 1, parameters for test scenario**

| Parameter | Value |
| --- | --- |
| Losses in cables & connectors | 3 dB |
| Cell radie | 200 m |
| Antenna height of the terminal | 1.7 m |
| Antenna height | 25 m |
| Max power output (Node B) | 43 dBm |
| Frequency | 2,140 MHz |
| Shadow fading std. | 7 dB |
| Shadow fading site correlation | 0.5 |
| Shadow fading correlation distance | 110 m |
| Orthogonality factor ($\alpha$) | 0.5 |

The optimization for the different objective functions was performed in 2000 steps (generations). The weight factors had been selected according to Table 2. As reference a network where all CPICH-power output had been set equal was used. The result after 2000 generations is shown in Table 3.

**Table 2. Weight factors**

| Objective function | $k_{cov}$ | $k_w$ | $k_x$ | $P_{target}$ | $P_{lv1}$ |
| --- | --- | --- | --- | --- | --- |
| 1 | $1\cdot10^6$ | 1000 | | 95% | -85.2 dBm |
| 2 | $1\cdot10^6$ | 1000 | | 95% | -85.2 dBm |
| 3 | $1\cdot10^9$ | 1000 | - | 95% | -85.2 dBm |
| 4 | $1\cdot10^6$ | - | - | 95% | -85.2 dBm |
| 5 | $1\cdot10^6$ | 1000 | $1\cdot10^6$ | 95% | -85.2 dBm |

**Table 3. Results**

| Objective function | Final objective function low/high load | CPICH coverage low/high load | Average CPICH power output [dBm] low/high load | Average total power output [dBm] low/high load | CPU time [s] low/high load |
| --- | --- | --- | --- | --- | --- |
| Reference | - | 95.01% | 37 / 37 | 39.9 / 41.5 | - |
| 1 | 58.61 / 58.61 | 95.08% | 37.7 / 37.7 | 41.8/ 48 | 393 / 350 |
| 2 | 16364 / 16364 | 95.01% | 35.5 / 35.5 | 38.7 / 40.6 | 390 / 358 |
| 3 | 63.44 / 45.74 | 95.01% | 35.5 / 35.9 | 38.6 / 40.3 | 3924 / 3802 |
| 4 | 60.21 / 39.66 | 95.01% | 35.5 / 35.6 | 38.7 / 40.7 | 4205 / 4052 |
| 5 | 16035 / 15472 | 95.01% | 35.6 / 35.5 | 38.7 / 40.5 | 666 / 646 |

At inspection of Table 3 can be seen that the here suggested objective functions in combination with the optimization steps, provide an improvement with regard to both the average power output of the pilot channels (CPICH) and the average total power output, with reasonable/moderate process time (CPU-time).
The objective functions and the optimization algorithm have here been used to optimize the pilot channel power. The location of the base stations have in this analysis been assumed to be fixed. The here described method can also be used to optimize the location of the base stations. Then objective function 1, $F_l$, or the like is preferably used.

The aim of the present invention is to optimize the pilot planning in a CDMA-based cellular network for mobile telephony, here exemplified by W-CDMA cellular network according to the UMTS-specifications. The invention should be possible to utilize, with minor modifications in CDMA-networks according to IS-95, and the further development of CDMA according to IS-95 which are under development. As the expert realizes, similar methods can be usable also for other optimization of cellular radio networks, but requires that the objective functions are re-defined to describe the current need of optimization. Optimizations where the method according to the present invention can be utilized can for instance be frequency planning in GSM-networks, base station power output in GSM- or TDMA-networks etc.

The method is easiest applied in form of a software product, where the definition of objective function and input of necessary parameters to describe current radio network can constitute one module, and the optimization algorithms another. By a module construction can, for instance, change of optimization algorithm easily be made.

The software can be stored in, and be executed on, a computer, preferably a PC, work station, or if high calculation capacity is needed, a specifically dedicated computer. The computer is suitably in connection with the mobile telephone system for easy transmission of received/obtained CPICH-values to the base stations, preferably put through/ transmitted via the RNC. If the power output of the pilot channels shall be managed dynamically, the software product should be implemented so that information rapidly can be transmitted between the computer which performs the optimization and the control functions of the radio network. The software product can be provided and/or marketed for instance stored on computer storing media such as diskette, CD, DVD, or be transmitted for instance via Internet.

The above described embodiments can be modified in many ways and be varied within the frame of the basic idea of the invention. Such variations and modifications are regarded to be within the frame of the invention as it is defined in the enclosed patent claims.

**Claims**

1. Method to, in a cellular radio network, configure power output of pilot channels, radio network including a plurality of cells and to each cell an associated base station and a pilot channel, including the steps:

   division of the radio network, or part of the radio network, into subareas/parts of area,
   estimation of the attenuation ($\lambda_p^n$) of the radio signal for all, or defined combinations of, subareas/parts of area and cells,
   estimation of type of traffic and traffic load within each subarea/part of area,
   calculation of an objective function to get a numerical value regarding the quality of the radio network, or part of the radio network, on basis of a configuration of power output of pilot channels,
   optimization with the aim to configure the power output values of pilot channels so that the numerical value of the objective function is maximized,

   **characterized in**
   **that** the division of the radio network, or part of the radio network, is so made that in each subarea the signal strength from the pilot channels of the cells are expected to be essentially constant and within each subarea the traffic load is expected to be essentially constant, and
   **that** the objective function includes a coverage related term and a capacity related term.

2. Method as claimed in patent claim 1,
   **characterized in that** the coverage term punishes, by/with one to the coverage related weight factor ($k_{cov}$), suggested configurations which do not meet with the coverage demand.

3. Method as claimed in patent claim 2,
   **characterized in that** the capacity term essentially describes an average value of remaining power margin in the cells, and if any cell exceeds its maximum power output, suggested configuration is punished with/by one to the capacity related weight factor ($k_w$).

4. Method as claimed in patent claim 1,
   **characterized in that** the optimization step includes an optimization algorithm including random variation of power output of selected pilot channels and a selection process to select the power output values of those pilot channels which maximize the numerical value of the objective function.

5. Method as claimed in patent claim 1,

**characterized in that** the optimization step is composed of a genetic algorithm.

6. Method as claimed in patent claim 3,
**characterized in that** the objective function ($F_{III}$) essentially can be described according to

$$F_{III} = \frac{100}{\sum_n P_{max,n}} \left( F_{cov} + \sum_n W_n^{III} \left( P_{max,n} - P_n^{TOT} \right) \right)$$

where $F_{cov}$, is the coverage related term, the sum $\sum_n W_n^{III} \left( P_{max,n} - P_n^{TOT} \right)$ is the capacity related term,

$$W_n^{III} = \begin{cases} 1, & if \ P_n^{TOT} \leq P_{max,n} \\ k_w & otherwise \end{cases} \quad and \quad F_{cov} = \begin{cases} 0, & if \ p_{cov} \geq p_{target} \\ 100\left(p_{cov} - p_{target}\right)k_{cov} \end{cases},$$

where $P_n^{TOT}$ is the total power output, $P_{n,max}$ is the maximum available power of each base station, $P_{cov}$ is an assumed area probability, and $P_{target}$ is the wanted area probability.

7. Method as claimed in patent claim 2,
**characterized in that** the capacity term essentially is calculated on basis of the load margin per cell and that the capacity term of the objective function essentially describes the average load margin.

8. Method as claimed in patent claim 7,
**characterized in that** the objective function ($F_{IV}$) essentially can be described according to

$$F_{IV} = \frac{100}{N_{cells}} \left( F_{cov} + \sum_n (1 - X_n)\left(1 - \frac{P_n^{TOT}}{P_{max,n}}\right) \right)$$

where $F_{cov}$, is the coverage related term, the sum $\sum_n (1 - X_n)\left(1 - \frac{P_n^{TOT}}{P_{max,n}}\right)$ is the capacity related term,

$$F_{cov} = \begin{cases} 0, & if \ p_{cov} \geq p_{target} \\ 100\left(p_{cov} - p_{target}\right)k_{cov} \end{cases},$$

where $X_n$ is current load per cell, $P_n^{TOT}$ is the total power output, $P_{n,max}$ is the maximum available power of each base station, $P_{cov}$ is an assumed area probability, and $P_{target}$ is the wanted area probability.

9. Method as claimed in patent claim 2,
**characterized in that** the capacity term of the objective function is weighted by/with a load describing factor and that the cells which have a traffic load exceeding a predefined value are punished by/with one to the traffic load of the cell related weight factor ($k_x$).

10. Method as claimed in patent claim 7,
**characterized in that** the objective function ($F_v$) essentially can be described according to

$$F_V = \frac{1}{N_{cells}} \left( F_{cov} + \sum_n W_n^I W_n^V \frac{P_{max,n}^{CPICH} - P_n^{CPICH}}{1 - X_n} \right)$$

where $F_{cov}$, is the coverage related term, the sum $\sum_n W_n^I W_n^V \frac{P_{max,n}^{CPICH} - P_n^{CPICH}}{1 - X_n}$ is the capacity related term,

$$F_{cov} = \begin{cases} 0, & if \ p_{cov} \geq p_{target} \\ 100(p_{cov} - p_{target})k_{cov} \end{cases},$$

$$W_n^{III} = \begin{cases} 1, & if \ P_n^{TOT} \leq P_{max,n} \\ k_w & otherwise \end{cases},$$

$$W_n^V = \begin{cases} 1, & if \ X_n < 1 \\ k_X & otherwise \end{cases},$$

where $P_n^{CPICH}$ is the power output of the pilot channels per cell $n$, $P_{max,n}^{CPICH}$ is the maximum allowed power output of the pilot channels per cell, $X_n$ is current load per cell, $P_n^{TOT}$ is the total power output, $P_{n,max}$ is the maximum available power of each base station, $p_{cov}$ is an assumed area probability, and $P_{target}$ is the wanted area probability.

11. Software product which directly can be loaded to an internal memory in a processor in a computer intended to be used for pilot channel configuration, the software product including software code for execution of the steps in just any of the patent claims 1-10.

12. Software product stored in one for computers usable storing medium, including one or more programs to effect/ achieve a process in a computer intended to be used for pilot channel configuration, to check the execution of the steps in just any of the patent claims 1-10.

13. Radio network for mobile communication in which the method according to any of the patent claims 1-10 is implemented.

**Patentansprüche**

1. Verfahren zum Konfigurieren der Leistungsausgabe von Pilotkanälen in einem zellulären Funknetzwerk, wobei das Funknetzwerk eine Anzahl von Zellen und für jede Zelle eine zugeordnete Basisstation und einen Pilotkanal aufweist, mit den Schritten:

Aufteilen des Funknetzwerkes oder eines Teils des Netzwerkes in Unterareale/Teile von Arealen,
Abschätzung der Dämpfung ($\lambda_p^n$) des Funksignals für alle oder definierte Kombinationen von Unterarealen/ Teilen von Arealen und Zellen,
Abschätzung des Typs von Verkehr und Verkehrsbelastung innerhalb jedes Unterareals/Teils eines Areals,
Berechnung einer objektiven Funktion zum Erhalten eines numerischen Wertes hinsichtlich der Qualität des Funknetzwerkes oder eines Teils des Funknetzwerkes auf Grundlage einer Konfiguration der Leistungsausgabe von Pilotkanälen,
Optimierung mit dem Ziel des Konfigurierens der Leistungsausgabewerte von Pilotkanälen derart, dass der numerische Wert der objektiven Funktion maximiert wird, **dadurch gekennzeichnet, dass** die Aufteilung des Funktnetzwerkes oder eines Teils des Funknetzwerkes derart geschaltet ist, dass in jedem Unterareal die Signalstärke der Pilotkanäle der Zellen als im wesentlichen konstant erwartet wird und innerhalb jedes Unterareals die Verkehrslast als im wesentlichen konstant erwartet wird und dass die objektive Funktion einen abdeckungsbezogenen Term und einen kapazitätsbezogenen Term aufweist.

2. Verfahren nach Anspruch 1, **dadurch gekennzeichnet, dass** der Abdeckungsterm vorgeschlagene Konfigurationen, die der Abdeckungsanforderung nicht entsprechen, durch/mit einem sich auf die Abdeckung beziehenden Gewichtungsfaktor ($k_{cov}$) bestraft.

3. Verfahren nach Anspruch 2, **dadurch gekennzeichnet, dass** der Kapazitätsterm im wesentlichen einen Mittelwert der verbleibenden Leistungsmarge in den Zellen beschreibt, und falls irgendeine Zelle ihre Maximalleistungsausgabe überschreitet, die vorgeschlagene Konfiguration mit/durch einen sich auf die Kapazität beziehenden Gewichtsfaktor ($k_w$) bestraft.

4. Verfahren nach Anspruch 1, **dadurch gekennzeichnet, dass** der Optimierungsschritt einen Optimierungsalgorithmus aufweist mit statistischer Variation der Leistungsausgabe von ausgewählten Pilotkanälen und einen Auswahlprozess zur Auswahl der Leistungsausgabewerte derartiger Pilotkanäle, die den numerischen Wert der objektiven Funktion maximieren.

5. Verfahren nach Anspruch 1, **dadurch gekennzeichnet, dass** der Optimierungsschritt aus einem genetischen Algorithmus zusammengesetzt ist.

6. Verfahren nach Anspruch 3, **dadurch gekennzeichnet, dass** die objektive Funktion ($F_{III}$) beschrieben werden kann entsprechend

$$F_{III} = \frac{100}{\sum_n P_{max,n}} \left( F_{cov} + \sum_n W_n^{III} \left( P_{max,n} - P_n^{TOT} \right) \right)$$

wobei $F_{cov}$ der abdeckungsbezogene Term ist, wobei die Summe $\sum_n W_n^{III} \left( P_{max,n} - P_n^{TOT} \right)$ der kapazitätsbezogene Term ist, wobei

$$W_n^{III} = \begin{cases} 1, & if \ P_n^{TOT} \leq P_{max,n} \\ k_w & sonst \end{cases} \quad und \quad F_{cov} = \begin{cases} 0, & if \ p_{cov} \geq p_{target} \\ 100 \left( p_{cov} - p_{target} \right) k_{cov} \end{cases} ,$$

wobei $P_n^{TOT}$ die Gesamtleistungsausgabe ist, $P_{n,max}$ die maximal erhältliche Leistung jeder Basisstation ist, $p_{cov}$ die angenommene Flächenwahrscheinlichkeit ist und $p_{target}$ die erwünschte Flächenwahrscheinlichkeit ist.

7. Verfahren nach Anspruch 2, **dadurch gekennzeichnet, dass** der Kapazitätsterm im wesentlichen auf Grundlage der Belastungsmarge pro Zelle berechnet wird und dass der Kapaziätsterm der objektiven Funktion im wesentlichen die mittlere Belastungsmarge beschreibt.

8. Verfahren nach Anspruch 7, **dadurch gekennzeichnet, dass** die objektive Funktion ($F_{IV}$) im wesentlichen beschrieben werden kann, als

$$F_{IV} = \frac{100}{N_{cells}} \left( F_{cov} + \sum_n \left( 1 - X_n \right) \left( 1 - \frac{P_n^{TOT}}{P_{max,n}} \right) \right)$$

wobei $F_{cov}$, der abdeckungsbezogene Term ist, wobei die Summe $\sum_n \left(1 - X_n\right)\left(1 - \dfrac{P_n^{TOT}}{P_{max,n}}\right)$ der kapazitiv bezogene Term ist,

$$F_{cov} = \begin{cases} 0, & falls\ p_{cov} \geq p_{target} \\ 100\left(p_{cov} - p_{target}\right)k_{cov} \end{cases}$$

wobei $X_n$ die derzeitige Belastung pro Zelle ist, $P_n^{TOT}$ die Gesamtleistungsausgabe ist, $P_{n,max}$ die maximal erhältliche Leistung jeder Basisstation ist, $p_{cov}$ eine angenommene Flächenwahrscheinlichkeit ist und $p_{target}$ die gewünschte Flächenwahrscheinlichkeit ist.

9. Verfahren nach Anspruch 2, **dadurch gekennzeichnet, dass** der kapazitive Term der objektiven Funktion gewichtet wird mit einem lastbeschreibenenden Faktor und dass die Zellen, die eine Verkehrslast aufweisen, die einen vorgegebenen Wert überschreitet, durch einen die Verkehrslast der Zelle betreffenden Gewichtsfaktor ($k_x$) bestraft werden.

10. Verfahren nach Anspruch 7, **dadurch gekennzeichnet, dass** die objektive Funktionen ($F_v$) im wesentlichen beschrieben werden kann als

$$F_V = \frac{1}{N_{cells}}\left(F_{cov} + \sum_n W_n^I W_n^V \frac{P_{max,n}^{CPICH} - P_n^{CPICH}}{1 - X_n}\right)$$

wobei $F_{cov}$, der abdeckungsbezogene Term ist, wobei die Summe $\sum_n W_n^I W_n^V \dfrac{P_{max,n}^{CPICH} - P_n^{CPICH}}{1 - X_n}$ der kapaziätsbezogene Term ist,

$$F_{cov} = \begin{cases} 0, & falls\ p_{cov} \geq p_{target} \\ 100\left(p_{cov} - p_{target}\right)k_{cov} \end{cases},$$

$$W_n^{III} = \begin{cases} 1, & falls\ P_n^{TOT} \leq P_{max,n} \\ k_w & sonst \end{cases},$$

$$W_n^V = \begin{cases} 1, & if\ X_n < 1 \\ k_X & sonst \end{cases},$$

wobei $P_n^{CPICH}$ die Leistungsausgabe der Pilotkanäle pro Zelle n ist, $P_{max,n}^{CPICH}$ die maximal erlaubte Leistungsausgabe der Pilotkanäle pro Zelle ist, $X_n$ die gegenwärtige Last pro Zelle ist, $P_n^{TOT}$ die Gesamtleistungsausgabe ist, $P_{n,max}$ die maximal erhältliche Leistung jeder Basisstation ist, $p_{cov}$ eine angenommene Flächenwahrscheinlichkeit ist und $p_{target}$ die gewünschte Flächenwahrscheinlichkeit ist.

**11.** Softwareprodukt, das direkt in den internen Speicher eines Prozessors in einen Computer geladen werden kann, der für die Verwendung zur Pilotkanalkonfiguration eingesetzt wird, wobei das Softwareprodukt einen Softwarecode für die Ausführung der Schritte nach einem der Ansprüche 1 bis 10 aufweist.

**12.** Softwareprodukt, das auf einem für Computer verwendbaren Speichermedium gespeichert ist, mit einem oder mehreren Programmen zum Durchführen, Erhalten eines Prozessors in einem Computer, der für eine Verwendung zur Pilotkanalkonfiguration eingesetzt wird, zum Überprüfen der Ausführung der Schritte nach einem der Ansprüche 1 bis 10.

**13.** Funktnetzwerk für eine mobile Kommunikation, in dem das Verfahren nach einem der Ansprüche 1 bis 10 implementiert ist.

**Revendications**

**1.** Procédé de configuration, dans un réseau radio cellulaire, de la puissance de sortie de voies pilotes, le réseau radio incluant une pluralité de cellules et, pour chaque cellule, une station de base associée et une voie pilote, comprenant les étapes de :

division du réseau radio, ou d'une partie du réseau radio, en sous-régions / parties de région,
estimation de l'atténuation ($\lambda_p^n$) du signal radio pour la totalité, ou pour des combinaisons définies, des sous-régions / parties de région et des cellules,
estimation du type de trafic et de la charge de trafic dans chaque sous-région / partie de région,
calcul d'une fonction objective pour obtenir une valeur numérique concernant la qualité du réseau radio, ou d'une partie du réseau radio, sur la base d'une configuration de sortie de puissance des voies pilotes,
optimisation dans le but de configurer les valeurs de sortie de puissance des voies pilotes de sorte que la valeur numérique de la fonction objective soit maximale,

**caractérisé en ce que**
la division du réseau radio, ou d'une partie du réseau radio, est effectuée de sorte que, dans chaque sous-région, l'intensité de signal des voies pilotes des cellules puisse être sensiblement constante et que, dans chaque sous-région, la charge de trafic puisse être sensiblement constante, et
**en ce que** la fonction objective comprend un terme lié à la couverture et un terme lié à la capacité.

**2.** Procédé selon la revendication 1, **caractérisé en ce que**
le terme de couverture sanctionne, par/avec un facteur de pondération lié à la couverture ($k_{cov}$), les configurations suggérées qui ne satisfont pas à la demande de couverture.

**3.** Procédé selon la revendication 2, **caractérisé en ce que**
le terme de capacité décrit essentiellement une valeur moyenne de la marge de puissance restante dans les cellules et, si une cellule dépasse sa sortie de puissance maximale, la configuration suggérée est sanctionnée avec/par un facteur de pondération lié à la capacité ($k_w$).

**4.** Procédé selon la revendication 1, **caractérisé en ce que**
l'étape d'optimisation comprend un algorithme d'optimisation incluant une variation aléatoire de la sortie de puissance de voies pilotes sélectionnées et un traitement de sélection pour sélectionner les valeurs de sortie de puissance de ces voies pilotes qui donnent la valeur numérique maximale de la fonction objective.

**5.** Procédé selon la revendication 3, **caractérisé en ce que**
l'étape d'optimisation est composée d'un algorithme génétique.

**6.** Procédé selon la revendication 1, **caractérisé en ce que**
la fonction objective ($F_{III}$) essentiellement peut être décrite conformément à

$$F_{III} = \frac{100}{\sum_n P_{max,n}} \left( F_{cov} + \sum_n W_n^{III} \left( P_{max,n} - P_n^{TOT} \right) \right)$$

dans laquelle $F_{cov}$ est le terme lié à la couverture, la somme

$$\sum_n W_n^{III} \left( P_{max,n} - P_n^{TOT} \right)$$

est le terme lié à la capacité, et

$$W_n^{III} = \begin{cases} 1, & if \ P_n^{TOT} \le P_{max,n} \\ k_w \end{cases}$$

sinon

$$F_{cov} = \begin{cases} 0, & if \ p_{cov} \ge p_{target} \\ 100\left(p_{cov} - p_{target}\right)k_{cov} \end{cases}$$

où $P_n^{TOT}$ est la sortie de puissance totale, $P_{n,max}$ est la puissance disponible maximale de chaque station de base, $P_{cov}$ est une probabilité de région supposée et $P_{target}$ est la probabilité de région désirée.

7. Procédé selon la revendication 1, **caractérisé en ce que** le terme de capacité est essentiellement calculé sur la base de la marge de charge par cellule, et **en ce que** le terme de capacité de la fonction objective décrit essentiellement la marge de charge moyenne.

8. Procédé selon la revendication 1, **caractérisé en ce que** la fonction objective ($F_{IV}$) essentiellement peut être décrite conformément à

$$F_{IV} = \frac{100}{N_{cells}} \left( F_{cov} + \sum_n \left(1 - X_n\right)\left(1 - \frac{P_n^{TOT}}{P_{max,n}}\right) \right)$$

où $F_{cov}$ est le terme lié à la couverture, la somme

$$\sum_n \left(1 - X_n\right)\left(1 - \frac{P_n^{TOT}}{P_{max,n}}\right)$$

est le terme lié à la capacité,

$$F_{cov} = \begin{cases} 0, & if \ p_{cov} \ge p_{target} \\ 100\left(p_{cov} - p_{target}\right)k_{cov} \end{cases}$$

où $X_n$ est la charge courante par cellule, $P_n^{TOT}$ est la sortie de puissance totale, $P_{n,max}$ est la puissance disponible maximale de chaque station de base, $p_{cov}$ est une probabilité de région supposée, et $P_{target}$ est la probabilité de région désirée.

9. Procédé selon la revendication 2, **caractérisé en ce que** le terme de capacité de la fonction objective est pondéré par/avec un facteur décrivant la charge, et **en ce que** les cellules qui ont une charge de trafic dépassant une valeur prédéfinie sont sanctionnées par/avec un facteur de pondération lié à la charge de trafic de la cellule ($k_x$).

10. Procédé selon la revendication 7, **caractérisé en ce que** la fonction objective ($F_v$) peut être essentiellement décrite conformément à

$$F_V = \frac{1}{N_{cells}}\left( F_{cov} + \sum_n W_n^I W_n^V \frac{P_{max,n}^{CPICH} - P_n^{CPICH}}{1 - X_n} \right)$$

où $F_{cov}$ est le terme lié à la couverture, la somme

$$\sum_n W_n^I W_n^V \frac{P_{max,n}^{CPICH} - P_n^{CPICH}}{1 - X_n}$$

est le terme lié à la capacité,

$$F_{cov} = \begin{cases} 0, & if \ p_{cov} \ge p_{target} \\ 100\left(p_{cov} - p_{target}\right)k_{cov} \end{cases}$$

$$W_n^{III} = \begin{cases} 1, & if \ P_n^{TOT} \le P_{max,n} \\ k_w & otherwise \end{cases}$$

$$W_n^V = \begin{cases} 1, & if \ X_n < 1 \\ k_X & otherwise \end{cases},$$

où $p_n^{CPICH}$ est la sortie de puissance des voies pilotes par cellule n, $P_{max,n}^{CPICH}$ est la sortie de puissance permise maximale des voies pilotes par cellule, $X_n$ est la charge courante par cellule, $P_n^{TOT}$ est la sortie de puissance totale, $P_{n,max}$ est la puissance disponible maximale de chaque station de base, $P_{cov}$ est une probabilité de région supposée et $P_{target}$ est la probabilité de région désirée.

11. Produit logiciel qui peut être chargé directement dans une mémoire interne d'un processeur dans un ordinateur destiné à être utilisé pour la configuration de voies pilotes, le produit logiciel comprenant un code de logiciel pour exécution des étapes selon une quelconque des revendications 1 à 10.

12. Produit logiciel stocké dans un support de stockage utilisable pour des ordinateurs, incluant un ou plusieurs programmes pour effectuer / exécuter un traitement dans un ordinateur prévu pour être utilisé pour la configuration de voies pilotes, afin de vérifier l'exécution des étapes selon une quelconque des revendications 1 à 10.

13. Réseau radio pour communication mobile, dans lequel le procédé selon une quelconque des revendications 1 à 10 est mis en oeuvre.

**Figure 1a**

**Figure 1b**

$M$

Divide the radio network into, $N$, subareas $O_p$ $(p=1...M)$ — 205

Calculate attenuation the base station $n$ and the area $O_p$, $A^p{}_n$. — 210

Determine activity within $O_p$ — 215

Set initial pilot channel values $P_n{}^{CPICH}$ — 220

Calculate the objective function $F_{III}$ — 225

Optimize the objective function by varying and selecting $P_n{}^{CPICH}$ — 230

Transmit optimized values $P_n{}^{CPICH}$ to base stations — 235

# Figure 2